# EUROPÄISCHE PATENTSCHRIFT

(11) **EP 1 975 584 B1**
(45) Veröffentlichungstag und Bekanntmachung des Hinweises auf die Patenterteilung: **15.02.2012**
(21) Anmeldenummer: 08102949.8
(22) Anmeldetag: 27.03.2008
(51) Int. Cl.: G01L 1/24, G01L 5/00, B60L 5/22, G01L 1/22

(54) **Kontaktkraftmesseinrichtung und Verfahren zur Messung einer Kontaktkraft zwischen einem Stromabnehmer und einer Stromleitung**
Contact force measuring device and method for measuring the contact force between a current collector and a current supply line
Dispositif de mesure dynamométrique de contact et procédé de mesure d'une force de contact entre une prise de courant et une ligne de courant

(30) Priorität: 29.03.2007 DE 102007015180
(43) Veröffentlichungstag der Anmeldung: 01.10.2008
(73) Patentinhaber: SIEMENS AKTIENGESELLSCHAFT, 80333 München (DE)
(72) Erfinder: Bosselmann, Thomas, 91080, Marloffstein (DE)

(56) Entgegenhaltungen:
- EP-A1- 1 707 427
- DE-A1- 10 249 896
- FR-A1- 2 444 266
- GB-A- 1 087 719
- JP-A- 2001 018 692
- JP-A- 2002 328 063
- US-A- 4 619 147

## Beschreibung

Die vorliegende Erfindung betrifft eine Kraftmesszelle, eine Kontaktkraftmesseinrichtung an einem Stromabnehmer und ein Verfahren zur Messung einer Kontaktkraft zwischen einem Stromabnehmer.

In der DE 102 49 896 A1 sind eine Kontaktkraftmesseinrichtung und ein Verfahren zur Messung der Kontaktkraft zwischen einem Stromabnehmer und einer Stromleitung angegeben. Hierbei wird mindestens ein am Stromabnehmer angeordneter Faser-Bragg-Gitter-Sensor unter dem Einfluss der Kontaktkraft mechanisch gedehnt. Ein in den Faser-Bragg-Gitter-Sensor eingespeistes Lichtsignal wird aufgrund der mechanischen Dehnung in seinem Wellenlängengehalt verändert. Aus der kontaktkraftbedingten Wellenlängenänderung wird mittels Auswertung ein Maß für die Kontaktkraft bestimmt. Die Messeinrichtung und das Verfahren eignen sich besonders gut zur Ermittlung schneller Kraftänderungen. Die Messung statischer Kräfte ist jedoch stark fehlerbehaftet, da sich die Schleifleiste des Stromabnehmers aufgrund von Temperaturschwankungen verbiegen und statische Kontaktkräfte vortäuschen kann.

Aus der FR 2 444 266 A1 ist eine Kraftmesszelle mit mindestens einer Wandung, einem mit einem Absatz versehenen Boden und einem mit einer Öffnung versehenen Deckel bekannt, bei der Dehnungssensoren am Absatz und der Wandung vorgesehen sind.

Aufgabe der Erfindung ist es, eine Kraftmesszelle, eine Kontaktkraftmesseinrichtung und ein Verfahren anzugeben, die eine akkurate Messung einer schnell veränderlichen und einer statischen Kontaktkraft zwischen einem Stromabnehmer und einer Stromleitung zur gleichen Zeit ermöglichen.

Zur Lösung der Aufgabe wird eine Kontaktkraftmesseinrichtung entsprechend den Merkmalen des unabhängigen Patentanspruches 1 angegeben.

Hierbei soll die Kraftmesszelle mit mindestens einer Wandung, einem mit einem Absatz versehenen Boden und einem mit einer Öffnung versehenen Deckel versehen sein. Dabei ist ein stabförmiges Kraftübertragungsmittel durch die Öffnung bis zum Absatz erstreckbar. Weiter ist eine Vorspannung im Kraftübertragungsmittel zwischen Absatz und Deckel mittels eines Befestigungsmittels erzeugbar, wobei das Befestigungsmittel innerhalb der Kraftmesszelle am Kraftübertragungsmittel derart angebracht ist, dass eine Kraftwirkung vom Befestigungsmittel aus in Richtung der Längsachse des Kraftübertragungsmittels auf den Deckel ausübbar ist. Zudem sind der Absatz mit mindestens einem Dehnungssensor, der unter vom Kraftübertragungsmittel ausgehenden Krafteinfluss komprimiert wird, und die mindestens eine Wandung mit mindestens einem Dehnungssensor, der unter vom Kraftübertragungsmittel ausgehenden Krafteinfluss gedehnt wird, versehen.

Die Dehnungssensoren sind hierbei in einer so genannten "push-pull"-Konfiguration zueinander angeordnet. Während bei einer Krafteinwirkung auf den Absatz die Dehnungssensoren ein gegensinniges Ansprechverhalten aufweisen, aus dem die wirkende Kraft ermittelt werden kann, bewirkt eine Temperaturänderung sowohl eine Änderung der Ausdehnung des Kraftübertragungsmittels als auch eine Änderung der Ausdehnung der Kraftmesszelle selbst, so dass die Dehnungssensoren ein gleichsinniges Ansprechverhalten aufweisen. Die Temperaturschwankungen können somit herausgerechnet werden und beeinflussen die Kraftmessung nicht.

Vorteilhafte Ausgestaltungen gehen aus den von Anspruch 1 abhängigen Ansprüchen hervor. Dabei kann die Ausführungsform nach Anspruch 1 mit den Merkmalen abhängiger Ansprüche oder vorzugsweise auch denen aus mehreren dieser Ansprüche kombiniert werden. Demgemäß kann die Druckmessvorrichtung noch folgende Merkmale aufweisen:
- So kann es vorteilhaft sein, wenn die Kraftmesszelle hohlzylinderförmig oder hohlkonusförmig ausgebildet ist. Damit ist eine gleichmäßige Kräfteverteilung über die gesamte Zelle gewährleistet.
- Es kann von Vorteil sein, wenn das Befestigungsmittel als Befestigungsmutter ausgeführt ist, wobei das Kraftübertragungsmittel mit einem Außengewinde versehen ist. Hiermit ist eine möglichst einfach zu handhabende Fixierung des Kraftübertragungsmittels ermöglicht.
- Es kann günstig sein, wenn mindestens ein Temperatursensor zur Bestimmung der Temperatur des Hohlkörpers vorgesehen ist. Da der Druck im Hohlkörper temperaturabhängig ist und somit die druckabhängige Verformung der Membrane ebenfalls temperaturabhängig ist, kann mit der Temperaturbestimmung am Hohlkörper ein Korrekturwert ermittelt werden, mit welchem die Temperaturabhängigkeit der Membranverformung kompensierbar ist.
- Vorteilhafterweise kann das Kraftübertragungsmittel als Befestigungsbolzen ausgeführt sein. Somit kann ein bereits für einen Befestigung oder Verbindung vorhandener Befestigungsbolzen zur Kraftübertragung genutzt werden
- Günstiger Weise können als Dehnungssensoren piezoelektrische Sensoren vorgesehene sein. Solche Sensoren sind einfach zu handhaben und günstig in der Beschaffung.
- Es kann aber auch vorteilhaft sein, wenn als Dehnungssensoren optische Sensoren vorgesehene sind. Mit optischen Dehnungssensoren kann eine merklich höhere Messempfindlichkeit gegenüber üblichen mechanischen oder elektrischen Dehnungssensoren erreicht werden. Selbst kleinste Dehnungen sind somit messbar. Zudem ist die Installation optischer Dehnungssensoren sehr einfach. So können sie beispielsweise auf das zu untersuchende Objekt geklebt werden. Ein weiterer Vorteil ist, dass optische Dehnungssensoren in ihrem Einsatzort nicht einschränkt sind. Häufig werden sie vorteilhaft in Hochspannungsumgebung eingesetzt.

Dabei kann es von Vorteil sein, wenn als optische Sensoren Faser-Bragg-Gitter-Sensoren vorgesehene sind, die durch Einschreiben eines Bragg-Gitters in einen Lichtwellenleiter hergestellt werden können. Die geometrische Abmessung solcher vorteilhafter Faser-Bragg-Gitter-Sensoren wird im wesentlichen durch den verwendeten Lichtwellenleiter bestimmt. Der folglich äußerst geringe Platzbedarf von Faser-Bragg-Gitter-Sensoren erleichtert deren Montage auf dem Absatz und auf der Wandung. Weiterhin ist es vorteilhaft, dass zur Erfassung von Messgrößen keine Ein- und Auskopplung des Lichtsignals aus dem Lichtwellenleitern erforderlich ist. Die Lichtführung erfolgt bei Faser-Bragg-Gitter-Sensoren stets innerhalb des Lichtwellenleiters, wodurch eine besonders unempfindliche Messgrößenerfassung ermöglicht wird.

Bei der erfindungsgemäßen Kontaktkraftmesseinrichtung handelt es sich weiterhin um eine Kontaktkraftmesseinrichtung an einem Stromabnehmer, welcher mindestens eine Schleifleiste und eine Wippenrahmen aufweist, umfassend mindestens
- einen als Dehnungssensor ausgebildeten Kraftsensor für schnelle Kraftänderungen, der an der Schleifleiste so angeordnet ist, dass der Dehnungssensor unter dem Einfluss der Kontaktkraft, die zwischen dem Stromabnehmer und einer Stromleitung auftritt, mechanisch gedehnt wird,
- eine erfindungsgemäße Kraftmesszelle für statische Kräfte als Verbindungsmittel zwischen der mit dem Kraftübertragungsmittel versehenen Schleifleiste und dem Wippenrahmen, welcher mit der Kraftmesszellenwandung derart verbunden ist, dass der an der Wandung angebrachte Dehnungssensor zwischen Wippenrahmen und Kraftmesszellenboden angeordnet ist, und
- eine Auswerteeinheit zur Ermittlung eines gemeinsamen Messsignals für die Kontaktkraft aus einem von dem an der Schleifleiste angeordneten mindestens einen Kraftsensor herrührenden Messsignal und einem von der mindestens einen Kraftmesszelle herrührenden Messsignal.

Bei der erfindungsgemäßen Kontaktkraftmesseinrichtung ergeben sich die vorstehend für die erfindungsgemäße Kraftmesszelle erläuterten Vorteile. Das an der Schleifleiste ohnehin vorhandene Verbindungsmittel, insbesondere in Form eines mit einem Außengewinde versehenen Befestigungsbolzens, welches zur Befestigung der Schleifleiste am Wippenrahmen vorgesehen ist, wird hier zudem vorteilhafterweise als Kraftübertragungsmittel auf den Absatz der Kraftmesszelle genutzt.

Weitere Ausgestaltungen der erfindungsgemäßen Kontaktkraftmesseinrichtung gehen aus den abhängigen Ansprüchen hervor:
- So kann es vorteilhaft sein, wenn der an der Schleifleiste angeordnete mindestens eine Kraftsensor als optischer Sensoren ausgeführt ist. Es ergeben sich die bereits vorgenannten Vorteile für optische Sensoren.
- Dabei kann es günstig sein, wenn der an der Schleifleiste angeordnete mindestens eine optischer Sensor als Faser-Bragg-Gitter-Sensor ausgeführt ist. Es ergeben sich die bereits vorgenannten Vorteile für Faser-Bragg-Gitter-Sensoren.

Mit der Erfindung wird ferner ein Verfahren entsprechend den Merkmalen des unabhängigen Anspruchs 10 angegeben.

Bei dem erfindungsgemäßen Verfahren handelt es sich um ein Verfahren zur Messung einer Kontaktkraft zwischen einem Stromabnehmer und einer Stromleitung mittels der erfindungsgemäßen Kontaktkraftmesseinrichtung, welches folgende Schritte aufweist:
- Wandeln des von dem an der Schleifleiste angeordneten mindestens einen Kraftsensor herrührenden analogen Messsignals in ein erstes digitales Messsignal und Wandeln des von der mindestens einen erfindungsgemäßen Kraftmesszelle herrührenden analogen Messsignals in ein zweites digitales Messsignal,
- Hochpass-Filtern des ersten digitalen Messsignals gemäß einer ersten komplexen Übertragungsfunktion und Tiefpass-Filtern des zweiten digitalen Messsignals gemäß einer zweiten komplexen Übertragungsfunktion, wobei beide Übertragungsfunktionen zueinander komplementär sind, und
- Addieren der beiden gemäß den Übertragungsfunktionen gefilterten digitalen Messsignale zu einem gemeinsamen Messsignal.

Bei dem erfindungsgemäßen Verfahren ergeben sich die vorstehend für die erfindungsgemäße Kraftmesszelle und die erfindungsgemäße Kontaktkraftmesseinrichtung erläuterten Vorteile. Zudem erhält man mit der Addition, d.h. Superposition, beider digitalen Messsignale ein sehr breitbandiges gemeinsames Messsignal mit hoher Mittelwert-Präzision.

Weitere Ausgestaltungen des erfindungsgemäßen Verfahrens gehen aus den von Anspruch 10 abhängigen Ansprüchen hervor. Dabei kann die Ausführungsform nach Anspruch 10 mit den Merkmalen abhängiger Ansprüche oder vorzugsweise auch denen aus mehreren dieser Ansprüche kombiniert werden. Demgemäß kann das verfahren noch folgende Merkmale aufweisen:

So kann es vorteilhaft sein, wenn Hochpass Filtern des von dem an der Schleifleiste angeordneten mindestens einen Kraftsensor herrührenden analogen Messsignals vorgesehen ist. Gleichsignale, die sich bei der anschließenden Wandlung des analogen Messsignals störend auswirken könnten, werden dabei vermieden. So können speziell auf die Wandlung von Wechselsignalen optimierte Analog/Digital-Wandler verwendet werden, die bei der Wandlung des von dem an der Schleifleiste angeordneten mindestens einen Kraftsensor herrührenden analogen Messsignals, das als Wechselsignals vorliegt, eine optimale Signalqualität gewährleisten.

Günstigerweise kann ein Verstärken des von dem an der Schleifleiste angeordneten mindestens einen Kraftsensor herrührenden analogen Messsignals vor dem Wandeln in das erste digitale Messsignal und ein Dämpfen des ersten digitalen Messsignals vor dem Hochpass-Filtern gemäß der ersten Übertragungsfunktion vorgesehen sein. Damit ist gewährleistet, dass keine Signalinformation bei der Wandlung verloren geht.

Vorteilhafterweise kann Anti-Aliasing Filtern der beiden analogen Messsignale vor der Wandlung in das entsprechende digitale Messsignal vorgesehen sein. Hohe Frequenzen oberhalb der Nyquist-Frequenz werden gefiltert. Dies verbessert bei der Analog/Digitalwandlung die Signalqualität.

Bevorzugte, jedoch keinesfalls einschränkende Ausführungsbeispiele der Erfindung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: eine Einrichtung zur Messung der Kontaktkraft zwischen einem Stromabnehmer und einer Stromleitung,
- Figur 2: Kraftmesszelle zwischen der Schleifleiste und dem Wippenrahmen des Stromabnehmers aus Figur 1, und
- Figur 3: schematisierte Verfahrenschritte zur Auswertung der Messwerte für die Kontaktkraft.

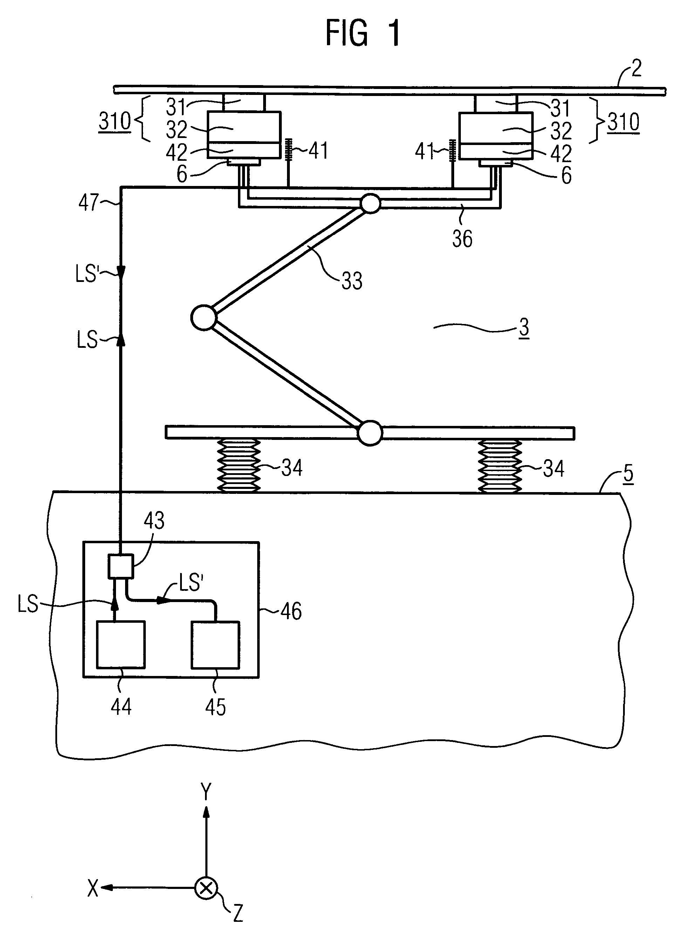

Einander entsprechende Teile sind in den Figuren 1 bis 3 mit denselben Bezugszeichen versehen.

In Figur 1 ist eine Einrichtung zur Messung der Kontaktkraft zwischen einem Stromabnehmer 3 eines Schienentriebfahrzeugs 5 und einer Stromleitung 2 dargestellt. Im Betrieb bewegt sich das Schienentriebfahrzeug 5 in x-Richtung fort. Die hierfür erforderliche Energie wird dem Schienenfahrzeug 5 über die Stromleitung 2 zugeführt.

Der konstruktive Aufbau des an sich bekannten Stromabnehmers 3 umfasst im Wesentlichen eine Schleifleiste 310, ein Haltegestell 36 für die Schleifleiste 310, einen Wippenrahmen 33 sowie elektrische Isolatoren 34, die die zuvor genannten Komponenten des Stromabnehmers 3 gegenüber dem Schienentriebfahrzeug 5 elektrisch isolieren. Die Schleifleiste 310 enthält einen Grundkörper 32 und ein Schleifelement 31.

Zur Erfassung schneller Änderungen der Kontaktkraft zwischen dem Stromabnehmer 3 und der Stromleitung 2 sind als Dehnungssensoren ausgebildete Kraftsensoren 41, die hier als optisch abfragbare Faser-Bragg-Gitter-Sensoren ausgeführt sind, vorgesehen. Sie sind an einem zusätzlichen zwischen der Schleifleiste 310 und dem Haltegestell 36 platzierten Dehnungselement 42 so angebracht, dass auch sie die zur Kontaktkraft proportionale Dehnung des Dehnungselements 42 erfahren. Die mechanische Dehnung bewirkt eine Verschiebung der Bragg-Wellenlänge des zugehörigen Faser-Bragg-Gitter-Sensors 41. Dies bedeutet, dass ein Lichtsignal LS, das einen vorbestimmten Wellenlängengehalt aufweist und dem Faser-Bragg-Gitter-Sensor 41 über einen Lichtwellenleiter 47 zugeführt wird, bei Vorliegen einer entsprechenden Änderung der Kontaktkraft in seinem Wellenlängengehalt oder zumindest in einer Wellenlänge verändert wird. Das im Faser-Bragg-Gitter-Sensor 41 in seinem Wellenlängengehalt veränderte Lichtsignal wird mit LS' bezeichnet. Die Wellenlängenänderung ist ein Maß für die Messinformation, also die Kontaktkraft. Das im Faser-Bragg-Gitter-Sensor 41 beeinflusste Lichtsignal LS' läuft im Lichtwellenleiter 47 zurück zu einer Sende/Empfangseinheit 46 und wird dort mittels einer Auswerteeinheit 45 detektiert. In der Auswerteeinheit 45 kommt ein in der Faser-Bragg-Sensorik üblicher Detektor zum Einsatz, vorzugsweise ein Polychromator mit CCD- oder Photodioden-Zeile. Das daraus hervorgehende Messsignal A2 ist ein analoges Wechselsignal.

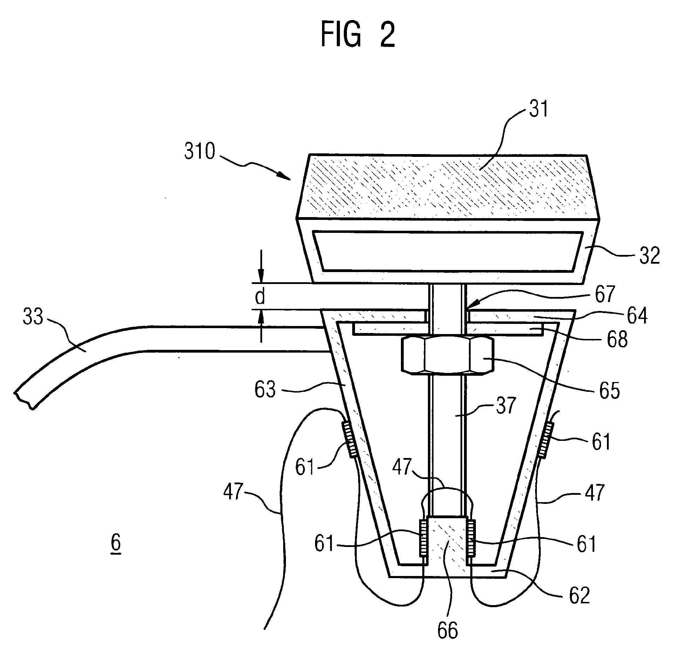

Zwischen der Schleifleiste 310 und dem Wippenrahmen 33 ist zudem jeweils eine Kraftmesszelle 6 angeordnet. Bei dem gezeigten Ausführungsbeispiel handelt es sich um optische Kraftmesszellen 6, die ebenfalls mit dem Lichtwellenleiter 47 verbunden sind. Es sind aber auch beispielsweise elektrische, insbesondere auf dem piezoelektrischen Effekt beruhende, Kraftmesszellen 6 als alternative Ausführungsform möglich. Jede Kraftmesszelle 6 dient zum Ermitteln statischer Kontaktkräfte. Sie weist hierzu ebenfalls Dehnungssensoren 61 auf, die als optisch abfragbare Faser-Bragg-Gitter-Sensoren ausgeführt sind. Die Kraftmesszellen 6 werden somit ebenfalls mit dem Lichtwellenleiter 47 verbunden und von dem Lichtsignal LS abgefragt, wobei das rück gestreute Lichtsignal LS' von der Auswerteeinheit 45 detektiert wird. Das daraus hervorgehende Messsignal A1 ist ein analoges Gleichsignal. In Figur 2 ist ein Querschnitt der Kraftmesszelle 6 im Detail dargestellt.

Mittels der Auswerteeinheit 45 werden schließlich beide Signale A1 und A2, d.h. das analoge Gleichsignal und das analoge Wechselsignal, digitalisiert und signalverarbeitet zu einem gemeinsamen Messsignal F12 addiert.

Die Sende/Empfangseinheit 46 enthält ferner eine Lichtquelle 44, die das zur Abfrage benötigte Lichtsignal LS mit dem vorbestimmten Wellenlängengehalt erzeugt. Ein Koppler 43 trennt ein- und ausgehende Lichtsignale LS bzw. LS' voneinander. Alle Komponenten der Sende/Empfangseinheit 46 befinden sich auf dem Potential des Schienentriebfahrzeugs 5, also auf Erdpotential. Demgegenüber sind die Kraftsensoren 41 und die Kraftmesszelle 6 auf Hochspannungspotential, nämlich im Wesentlichen dem Potential der Stromleitung 2, angeordnet. Die erforderliche Potentialüberbrückung ist jedoch mittels der optischen Übertragungsstrecke über den Lichtwellenleiter 47 problemlos zu bewerkstelligen.

Im Beispiel von Figur 1 ist ein reflektiver Aufbau gezeigt. Ein anderer optischer Aufbau, beispielsweise ein transmissiver, ist grundsätzlich ebenfalls möglich.

In Figur 2 ist ein Ausführungsbeispiel für die erfindungsgemäße Kraftmesszelle 6 dargestellt. Die Kraftmesszelle 6, welche hier beispielsweise hohlkonusförmig ausgeführt ist, weist eine Wandung 63, einen mit einem Absatz 66 versehenen Boden 62 und einen mit einer Öffnung 67 versehenen Deckel 64 auf. Die Kraftmesszelle 6 dient hierbei als Verbindungsmittel zwischen der Schleifleiste 310 und Wippenrahmen 33. Dabei ist der Wippenrahmen 33 kraftschlüssig mit der Wandung 63 der Kraftmesszelle 6 verbunden. Die Befestigung der Kraftmesszelle 6 an der Schleifleiste 310 erfolgt über einen kraftschlüssig mit der Schleifleiste 310 verbundenen Befestigungsbolzen 37. Dazu ist der Befestigungsbolzen 37 durch die Öffnung 67 bis zum Absatz 66 geführt. Mittels eines Befestigungsmittels 65 innerhalb der Kraftmesszelle 6 wird eine Vorspannung im Befestigungsbolzen 37 erzeugt. Hierzu ist der Befestigungsbolzen 37 vorteilhafterweise mit einem Außengewinde versehen, während das Befestigungsmittel 65 als Befestigungsmutter ausgeführt ist. Durch Drehen an der Befestigungsmutter 65 wird der Befestigungsbolzen 37 gegen den Absatz 66 gedrückt, während gleichzeitig die Befestigungsmutter 65 selbst gegen den Deckel 64 gepresst wird. Somit kann die Vorspannung auf einfache weise variiert und angepasst werden. Diese Vorspannung führt zu einer Vordehnung der Kraftmesszelle 6 und damit zu einer variierbaren Arbeitspunkteinstellung. Wird ausgehend von der Schleifleiste 310 über den Befestigungsbolzen 37 Kraft auf die Kraftmesszelle 6, welche am Wippenrahmen 33 befestigt ist, ausgeübt, wird deren Wandung 63 gedehnt, während der Absatz 66 gestaucht, d.h. komprimiert wird. Der Befestigungsbolzen 37 ist somit zugleich ein Kraftübertragungsmittel von der Schleifleiste auf die Kraftmesszelle. Mit an der Wandung 63 und am Absatz 66 kraftschlüssig angeordneten Dehnungssensoren 61 werden die genannten Verformungen gemessen, so dass auf die auf die Kraftmesszelle 6 wirkende statische Kraft geschlossen werden kann. Die an der Wandung 63 angebrachten Dehnungssensoren 61 sollten hierbei in Ausdehnungsrichtung ausgerichtet zwischen der Kontaktstelle des Wippenrahmens 33 mit der Wandung 63 und dem Kraftmesszellenboden 62 angeordnet sein. Eine derartige Konfiguration der Dehnungssensoren 61 wird "push-pull"-Konfiguration genannt. Eine solche Konfiguration hat den Vorteil, dass Umgebungstemperaturänderungen die Kraftmessung nicht beeinflussen, da Umgebungstemperaturänderungen eine Längenänderung des Befestigungsbolzens 37 und auch eine Änderung der Kraftmesszellenausdehnung bewirken, so dass alle Dehnungssensoren 61 in der Kraftmesszelle 6 gleichsinnig verformt werden. Die Umgebungstemperaturänderungen kann somit rechnerisch kompensiert werden.

Als Dehnungssensoren 61 eignen sich aufgrund ihrer hohen Empfindlichkeit insbesondere Faser-Bragg-Gitter-Sensoren. Dies hat den Vorteil, dass der Abstand d der Kraftmesszelle 6 zur Schleifleiste 310 möglichst gering gehalten werden kann, so dass beispielsweise 0,1 mm nicht überschritten werden. Dies kommt der Stabilität der gesamten Anordnung zu Gute. Darüber hinaus kann zudem die Kraftmesszelle 6 dementsprechend stabil mit genügend hoher Wandstärke ausgeführt werden.

Ein Faser-Bragg-Gitter-Sensor 41, 61 ist sehr kompakt. Er hat typischerweise einen Durchmesser von ca. 200 µm und eine Länge von ca. 10 mm. Er kann damit an fast jedem Ort angebracht werden.

Zum Schutz der Innenseite des Deckels 64 und für ein leichtgängiges Drehen ist zwischen dem Deckel 64 und der Befestigungsmutter 65 beispielsweise eine Unterlegscheibe 68 vorgesehen.

Mittels der Auswerteeinheit 45 werden schließlich beide Signale, d.h. das analoge Gleichsignal A1 und das analoge Wechselsignal A2, digitalisiert und signalverarbeitet zu einem gemeinsamen Messsignal F12 addiert.

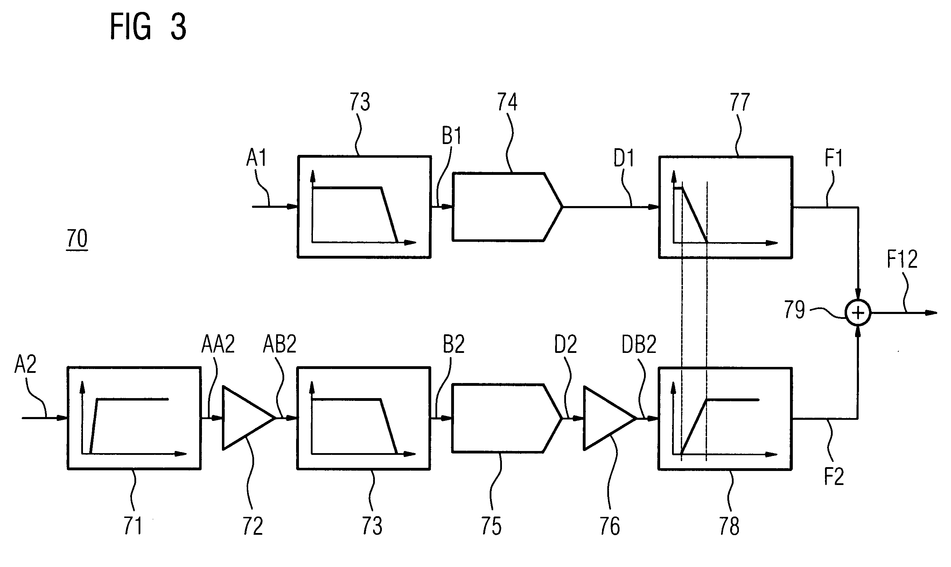

Zur Ermittlung des gemeinsamen Messsignals F12 mittels der Auswerteeinheit 45 werden das analoge Gleichsignal A1 und das analoge Wechselsignal A2 zunächst separat signalverarbeitet. In Figur 3 sind die einzelnen Verfahrenschritte in einem Flussdiagramm 70 dargestellt. Die in den Filtern 71, 73, 77 und 78 schematisch dargestellten Diagramme deuten hierbei Übertragungsfunktionen an.

Das analoge Gleichsignal A1 wird vor der Wandlung in ein digitales Gleichsignal D1 mittels eines Anti-Aliasing Filters 73 zur Dämpfung von Signalanteile oberhalb der Nyquist-Frequenz gefiltert. Das gefilterte analoge Wechselsignal B2 wird dann einem Analog/Digitalwandler 74, der insbesondere für die Wandlung von analogen Gleichsignalen ausgelegt und optimiert ist, zur Wandlung zugeführt.

Das analoge Wechselsignal A2 wird vor der Wandlung in ein digitales Wechselsignal D2 zunächst von einem eventuell vorhandenen Gleichsignalanteil mittels eines Hochpassfilters 71 befreit. Das hieraus resultierende analoge Wechselsignal AA2 wird anschließend mittels eines Verstärkers 72 verstärkt und das verstärkte analoge Wechselsignal AB2 mittels des Anti-Aliasing Filters 73 zur Dämpfung von Signalanteile oberhalb der Nyquist-Frequenz gefiltert. Das gefilterte analoge Wechselsignal B2 wird dann einem Analog/Digitalwandler 75, der insbesondere für die Wandlung von analogen Wechselsignalen ausgelegt und optimiert ist, zur Wandlung zugeführt. Nach der Wandlung wird das digitale Wechselsignal D2 einem Dämpfungsmittel 76 zugeführt, dessen Dämpfungswert beispielsweise dem Reziproken Wert der vorangehenden Verstärkung des analogen Wechselsignals AA2 entspricht. Der Dämpfungswert als auch der Verstärkungswert können selbstverständlich auch unabhängig voneinander gewählt werden. Das gedämpfte digitale Wechselsignal ist in Figur 3 mit DB2 bezeichnet.

Das digitale Gleichsignal D1 wird in einem nächsten Schritt einem Tiefpassfilter 77 und das digitale Wechselsignal DB2 einem Hochpassfilter 78 zugeführt. Beide Filter sind als Komplementärfilter 77 und 78 ausgeführt, und zwar ergibt die Summe der normierten komplexen Übertragungsfunktionen beider Filter 77 und 78 den konstanten Wert 1. Das Tiefpass gefilterte digitale Gleichsignal F1 wird in einem letzten Schritt mit dem Hochpass gefilterten digitalen Wechselsignal F2 mittels einer Additionseinheit 79, die Teil der Auswerteeinheit 45 ist, addiert, woraus sich das gewünschte gemeinsame digitale Messsignals F12 als Kontaktkraftsignal ergibt. Dieses ist vorteilhaft breitbandig und weist eine hohe Mittelwert-Präzision auf.

## Patentansprüche

1. Kontaktkraftmesseinrichtung an einem Stromabnehmer (3), welcher mindestens eine Schleifleiste (310) und eine Wippenrahmen (33) aufweist, umfassend mindestens
- einen als Dehnungssensor ausgebildeten Kraftsensor (41) für schnelle Kraftänderungen, der an der Schleifleiste (310) so angeordnet ist, dass der Dehnungssensor (41) unter dem Einfluss der Kontaktkraft, die zwischen dem Stromabnehmer (3) und einer Stromleitung (2) auftritt, mechanisch gedehnt wird,
**gekennzeichnet durch**
eine Kraftmesszelle (6) für statische Kräfte mit
- mindestens einer Wandung (63),
- einem mit einem Absatz (66) versehenen Boden (62), und
- einem mit einer Öffnung (67) versehenen Deckel (64), wobei
- ein stabförmiges Kraftübertragungsmittel (37) **durch** die Öffnung (67) bis zum Absatz (66) erstreckbar ist,
- mittels eines Befestigungsmittels (65) eine Vorspannung im Kraftübertragungsmittel (37) zwischen Absatz (66) und Deckel (64) erzeugbar ist, wobei das Befestigungsmittel (65) innerhalb der Kraftmesszelle (6) am Kraftübertragungsmittel (37) derart angebracht ist, dass eine Kraftwirkung vom Befestigungsmittel (65) aus in Richtung der Längsachse des Kraftübertragungsmittels (65) auf den Deckel (64) ausübbar ist,
- der Absatz (66) mit mindestens einem Dehnungssensor (61) versehen ist, der unter vom Kraftübertragungsmittel (37) ausgehenden Krafteinfluss komprimiert wird, und
- die mindestens eine Wandung (63) mit mindestens einem Dehnungssensor (61) versehen ist, der unter vom Kraftübertragungsmittel (37) ausgehenden Krafteinfluss gedehnt wird,
wobei die Kraftmesszelle (6) als Verbindungsmittel dient zwischen der mit dem Kraftübertragungsmittel (37) versehenen Schleifleiste (310) und dem Wippenrahmen (33), welcher mit der Kraftmesszellenwandung (63) derart verbunden ist, dass der an der Wandung (63) angebrachte Dehnungssensor (61) zwischen Wippenrahmen (33) und Kraftmesszellenboden (62) angeordnet ist, und
mit einer Auswerteeinheit (45) zur Ermittlung eines gemeinsamen Messsignals (F12) für die Kontaktkraft aus einem von dem an der Schleifleiste (310) angeordneten mindestens einen Kraftsensor (41) herrührenden Messsignal (A2) und einem von der mindestens einen Kraftmesszelle (6) herrührenden Messsignal (A1).

2. Kontaktkraftmesseinrichtung nach Anspruch 1, **dadurch gekennzeichnet, dass** die Kraftmesszelle (6) hohlzylinderförmig oder hohlkonusförmig ausgebildet ist.

3. Kontaktkraftmesseinrichtung nach Anspruch 1 oder 2, **dadurch gekennzeichnet, dass** das Befestigungsmittel (65) als Befestigungsmutter ausgeführt ist, wobei das Kraftübertragungsmittel (37) mit einem Außengewinde versehen ist.

4. Kontaktkraftmesseinrichtung nach einem der vorhergehenden Ansprüche, **dadurch gekennzeichnet, dass** das Kraftübertragungsmittel (37) ein Befestigungsbolzen ist.

5. Kontaktkraftmesseinrichtung nach einem der vorhergehenden Ansprüche, **dadurch gekennzeichnet, dass** als Dehnungssensoren (61) piezo-elektrische Sensoren vorgesehene sind.

6. Kontaktkraftmesseinrichtung nach einem der Ansprüche 1 bis 4, **dadurch gekennzeichnet, dass** als Dehnungssensoren (61) optische Sensoren vorgesehene sind.

7. Kontaktkraftmesseinrichtung nach Anspruch 6, **dadurch gekennzeichnet, dass** als optische Sensoren (61) Faser-Bragg-Gitter-Sensoren vorgesehen sind.

8. Kontaktkraftmesseinrichtung nach einem der vorangehenden Ansprüche, **dadurch gekennzeichnet, dass** der an der Schleifleiste (310) angeordnete mindestens eine Kraftsensor (41) als optischer Sensoren ausgeführt ist.

9. Kontaktkraftmesseinrichtung nach Anspruch 8, **dadurch gekennzeichnet, dass** der an der Schleifleiste (310) angeordnete mindestens eine optischer Sensor (41) als Faser-Bragg-Gitter-Sensor ausgeführt ist.

10. Verfahren zur Messung einer Kontaktkraft zwischen einem Stromabnehmer (3) und einer Stromleitung (2) mittels der Kontaktkraftmesseinrichtung nach einem der vorangehenden Ansprüche, welches folgende Schritte aufweist:
- Wandeln des von dem an der Schleifleiste (310) angeordneten mindestens einen Kraftsensor (41) herrührenden analogen Messsignals (A2) in ein erstes digitales Messsignal (D2) und Wandeln des von der mindestens einen Kraftmesszelle (6) nach einem der Ansprüche 1 bis 7 herrührenden analogen Messsignals (A1) in ein zweites digitales Messsignal (D1),
- Hochpass-Filtern des ersten digitalen Messsignals (D2, DB2) gemäß einer ersten komplexen Übertragungsfunktion und Tiefpass-Filtern des zweiten digitalen Messsignals (D1) gemäß einer zweiten komplexen Übertragungsfunktion, wobei beide Übertragungsfunktionen zueinander komplementär sind, und
- Addieren der beiden gemäß den Übertragungsfunktionen gefilterten digitalen Messsignale (F1, F2) zu einem gemeinsamen Messsignal (F12).

11. Verfahren nach Anspruch 10, **gekennzeichnet durch** Hochpass Filtern des von dem an der Schleifleiste (310) angeordneten mindestens einen Kraftsensor (41) herrührenden analogen Messsignals (A2, AB2, B2).

12. Verfahren nach Anspruch 10 oder 11, **gekennzeichnet durch**
- Verstärken des von dem an der Schleifleiste (310) angeordneten mindestens einen Kraftsensor (41) herrührenden analogen Messsignals (A2, AA2, B2) vor dem Wandeln in das erste digitale Messsignal (D2) und
- Dämpfen des ersten digitalen Messsignals (D2) vor dem Hochpass-Filtern gemäß der ersten Übertragungsfunktion.

13. Verfahren nach einem der Ansprüche 10 bis 12, **gekennzeichnet durch** Anti-Aliasing Filtern der beiden analogen Messsignale (A1, A2, AA2, AB2) vor der Wandlung in das entsprechende digitale Messsignal (D1, D2).

## Claims

1. Contact force measuring device at a current collector (3) which has at least one contact strip (310) and a rocker frame (33), comprising at least
- one force sensor (41) embodied as a strain sensor for fast force changes which is arranged on the contact strip (310) in such a way that the strain sensor (41) is mechanically stretched under the influence of the contact force which occurs between the current collector (3) and a current supply line (2),
**characterised by**
a force measuring cell (6) for static forces having
- at least one wall (63),
- a base (62) provided with a step (66) and
- a cover (64) provided with an opening (67),
wherein
- a rod-shaped force transmitting means (37) can be extended through the opening (67) as far as the step (66),
- with the aid of a fastening means (65) an initial tension can be generated in the force transmitting means (37) between step (66) and cover (64), with the fastening means (65) being attached to the force transmitting means (37) inside the force measuring cell (6) in such a way that starting from the fastening means (65) a force action can be exerted in the direction of the longitudinal axis of the force transmitting means (37) onto the cover (64),
- the step (66) is provided with at least one strain sensor (61) which under the influence of force coming from the force transmitting means (37), and
- the at least one wall (63) is provided with at least one strain sensor (61) which is stretched under the influence of force coming from the force transmitting means (37),
wherein the force measuring cell (6) serves as a connecting means between the contact strip (310) provided with the force transmitting means (37) and the rocker frame (33) which is connected to the force measuring cell wall (63) in such a way that the strain sensor (61) mounted on the wall (63) is arranged between rocker frame (33) and force measuring cell base (62), and having an evaluation unit (45) for determining a common measurement signal (F12) for the contact force from a measurement signal (A2) originating from the at least one force sensor (41) arranged on the contact strip (310) and a measurement signal (A1) originating from the at least one force measuring cell (6).

2. Contact force measuring device according to claim 1, **characterised in that** the force measuring cell (6) is embodied in a hollow cylinder shape or in a hollow cone shape.

3. Contact force measuring device according to claim 1 or 2, **characterised in that** the fastening means (65) is embodied as a fastening nut, with the force transmitting means (37) being provided with an external thread.

4. Contact force measuring device according to one of the preceding claims, **characterised in that** the force transmitting means (37) is a fastening bolt.

5. Contact force measuring device according to one of the preceding claims, **characterised in that** piezoelectric sensors are provided as strain sensors (61).

6. Contact force measuring device according to one of claims 1 to 4, **characterised in that** optical sensors are provided as strain sensors (61).

7. Contact force measuring device according to claim 6, **characterised in that** fibre Bragg grating sensors are provided as optical sensors (61).

8. Contact force measuring device according to one of the preceding claims, **characterised in that** the at least one force sensor (41) arranged on the contact strip (310) is implemented as an optical sensor.

9. Contact force measuring device according to claim 8, **characterised in that** the at least one optical sensor (41) arranged on the contact strip (310) is implemented as a fibre Bragg grating sensor.

10. Method for measuring a contact force between a current collector (3) and a current supply line (2) by means of the contact force measuring device according to one of the preceding claims, said method comprising the hollowing steps of:
- converting the analogue measurement signal (A2) originating from the at least one force sensor (41) arranged on the contact strip (310) into a first digital measurement signal (D2) and converting the analogue measurement signal (A1) originating from the at least one force measuring cell (6) according to one of claims 1 to 7 into a second digital measurement signal (D1),
- high-pass filtering the first digital measurement signal (D2, DB2) according to a first complex transmission function and low-pass filtering the second digital measurement signal (D1) according to a second complex transmission function, with the two transmission functions being complementary to one another, and
- adding the two digital measurement signals (F1, F2) filtered according to the transmission functions to form a common measurement signal (F12).

11. Method according to claim 10, **characterised by** high-pass filtering of the analogue measurement signal (A2, AB2, B2) originating from the at least one force sensor (41) arranged on the contact strip (310).

12. Method according to claim 10 or 11, **characterised by**
- amplifying the analogue measurement signal (A2, AA2, B2) originating from the at least one force sensor (41) arranged on the contact strip (310) prior to conversion into the first digital measurement signal (D2) and
- attenuating the first digital measurement signal (D2) prior to the high-pass filtering according to the first transmission function.

13. Method according to one of claims 10 to 12, **characterised by** anti-aliasing filtering of the two analogue measurement signals (A1, A2, AA2, AB2) prior to the conversion into the corresponding digital measurement signal (D1, D2).

## Revendications

1. Dispositif de mesure dynamométrique de contact sur un appareil ( 3 ) de prise de courant, qui comporte au moins une baguette ( 310 ) de frottement et un cadre ( 33 ) d'archet, comprenant au moins
- un capteur ( 41 ) de force constitué en capteur d'allongement pour des variations rapides de force, qui est monté sur la baguette ( 310 ) de frottement, de manière à ce que le capteur ( 41 ) d'allongement soit allongé mécaniquement sous l'influence de la force de contact, qui se produit entre l'appareil ( 3 ) de prise de courant et une ligne ( 2 ) de courant,
**caractérisé par**
une cellule ( 6 ) de mesure de forces statiques comprenant
- au moins une paroi ( 63 ),
- un fond ( 62 ) pourvu d'un ressaut ( 66 ), et
- un couvercle ( 64 ) pourvu d'une ouverture ( 67 ), dans lequel
- un moyen ( 37 ) en forme de barreau de transmission de force peut s'étendre dans l'ouverture ( 67 ) jusqu'au ressaut ( 66 ),
- une précontrainte dans le moyen ( 37 ) de transmission de force, entre le ressaut ( 66 ) et le couvercle ( 64 ), peut être produite à l'aide d'un moyen ( 65 ) de fixation, le moyen ( 65 ) de fixation étant mis sur le moyen ( 37 ) de transmission de force à l'intérieur de la cellule ( 6 ) de mesure de forces, de manière à ce qu'un effet de force puisse s'appliquer sur le couvercle ( 64 ) par le moyen ( 65 ) de transmission de force dans la direction de l'axe longitudinal du moyen ( 65 ) de transmission de force,
- le ressaut ( 66 ) est pourvu d'au moins un capteur ( 61 ) d'allongement, qui est comprimé sous l'influence de la force provenant du moyen ( 37 ) de transmission de force, et
- la au moins une paroi ( 63 ) est pourvue d'au moins un capteur ( 61 ) d'allongement, qui est allongé sous l'influence de la force provenant du moyen de transmission de force,
dans lequel la cellule ( 6 ) de mesure de forces sert de moyen de liaison entre la baguette ( 310 ) de frottement pourvue du moyen ( 37 ) de transmission de force et le cadre ( 33 ) d'archet, lequel est relié à la paroi ( 63 ) de la cellule de mesure de force, de manière à ce que le capteur ( 61 ) d'allongement mis sur la paroi ( 63 ) soit disposé entre le cadre ( 33 ) d'archet et le fond ( 62 ) de la cellule de mesure de force, et
comprenant une unité ( 45 ) d'exploitation pour la détermination d'un signal F12 ) commun de mesure de la force de contact à partir d'un signal ( A2 ) de mesure provenant du au moins un capteur ( 41 ) de force disposé sur la baguette ( 310 ) de frottement et d'un signal ( A1 ) de mesure provenant de la au moins une cellule ( 6 ) de mesure de forces.

2. Dispositif de mesure dynamométrique de contact suivant la revendication 1, **caractérisé en ce que** la cellule ( 6 ) de mesure de forces est constituée sous la forme d'un cylindre creux ou d'un cylindre creux en cône.

3. Dispositif de mesure dynamométrique de contact suivant la revendication 1 ou 2, **caractérisé en ce que** le moyen ( 65 ) de fixation est réalisé sous la forme d'un écrou de fixation, le moyen ( 37 ) de transmission de force étant muni d'un filetage extérieur.

4. Dispositif de mesure dynamométrique de contact suivant l'une des revendications précédentes, **caractérisé en ce que** le moyen ( 37 ) de transmission de force est un boulon de fixation.

5. Dispositif de mesure dynamométrique de contact suivant l'une des revendications précédentes, **caractérisé en ce qu'**il est prévu des capteurs piézoélectriques comme capteurs ( 61 ) d'allongement.

6. Dispositif de mesure dynamométrique de contact suivant l'une des revendications 1 à 4, **caractérisé en ce qu'**il est prévu des capteurs optiques comme capteurs ( 61 ) d'allongement.

7. Dispositif de mesure dynamométrique de contact suivant la revendication 6, **caractérisé en ce qu'**il est prévu des capteurs à réseau de Bragg à fibres comme capteurs ( 61 ) optiques.

8. Dispositif de mesure dynamométrique de contact suivant l'une des revendications précédentes, **caractérisé en ce que** le au moins un capteur ( 41 ) de force, disposé sur la baguette ( 310 ) de frottement, est réalisé en capteurs optiques.

9. Dispositif de mesure dynamométrique de contact suivant la revendication 8, **caractérisé en ce que** le au moins un capteur ( 41 ) optique, disposé sur la baguette ( 310 ) de frottement, est réalisé en capteur à réseau de Bragg à fibres.

10. Procédé de mesure d'une force de contact entre un appareil ( 3 ) collecteur de courant et une ligne ( 2 ) de courant à l'aide du dispositif de mesure dynamométrique de contact suivant l'une des revendications précédentes, qui comporte les stades suivantes :
- transformation du signal ( A2 ) de mesure provenant du au moins un capteur ( 41 ) de force disposé sur la baguette ( 310 ) de frottement en un premier signal ( D2 ) de mesure numérique et transformation du signal ( A1 ) de mesure analogique provenant de la au moins une cellule ( 6 ) de mesure de forces suivant l'une des revendications 1 à 7, en un deuxième signal ( D1 ) numérique,
- filtrage passe-haut du premier signal ( D2, DB2 ) de mesure numérique suivant une première fonction de transfert complexe et filtrage passe-bas du deuxième signal ( D1 ) de mesure numérique suivant une deuxième fonction de transfert complexe, les deux fonctions de transfert étant complémentaires l'une de l'autre, et
- addition des deux signaux ( F1, F2 ) de mesure numériques filtrés suivant les fonctions de transfert en un signal ( F12 ) de mesure commun.

11. Procédé suivant la revendication 10, **caractérisé par** un filtrage passe-haut du signal (A2, AB2, B2) analogique provenant du au moins un capteur ( 41 ) de force disposé sur la baguette ( 310 ) de frottement.

12. Procédé suivant la revendication 10 ou 11, **caractérisé par**
- une amplification du signal ( A2, AA2, B2 ) de mesure analogique provenant du au moins un capteur ( 41 ) de force disposé sur la baguette ( 310 ) de frottement avant la transformation en le premier signal ( D2 ) de mesure numérique et
- une atténuation du premier signal ( D2 ) de mesure numérique avant le filtrage passe-haut suivant la première fonction de transfert.

13. Procédé suivant l'une des revendications 10 à 12, **caractérisé par** un filtrage anti-aliasing des deux signaux ( A1, A2, AA2, AB2 ) de mesure analogiques avant la transformation en le signal ( D1, D2 ) de mesure numérique correspondant.
